# EUROPEAN PATENT APPLICATION

(11) **EP 4 105 082 A1**
(43) Date of publication of application: **21.12.2022**
(21) Application number: 22178695.7
(22) Date of filing: 13.06.2022
(51) Int. Cl.: B60Q 1/52, B60Q 5/00, B60Q 1/00, B60R 11/02, B60Q 7/00

(54) **CONTROL SYSTEM FOR AN EMERGENCY VEHICLE**

(30) Priority: 14.06.2021 IT 202100003131 U
(71) Applicant: MDPtech S.r.l., 12037 Saluzzo (CN) (IT)
(72) Inventor: BARAVALLE, Giacomo, I-12018 ROCCAVIONE (Cuneo) (IT); BARAVALLE, Lorenzo, I-12030 MANTA (Cuneo) (IT)
(74) Representative: Deambrogi, Edgardo

(57) **Abstract**

A control system (100) for an emergency vehicle (102) comprising a steering wheel (103) and at least one first emergency device (104) is described, wherein the control system comprises a control device (106) including:
- a coupling means (200) arranged to allow the control device (106) to be coupled to the steering wheel (103) of the emergency vehicle;
- at least one first activation means (204) arranged to be actuated by a user who is driving the emergency vehicle;
- a first electronic control means (206) arranged to:
a) generate a first control signal when the user actuates the first activation means (204); and
b) transmit the first control signal to a second electronic control means (108); wherein the second electronic control means (108) is arranged to activate or
deactivate the first emergency device (104) on the basis of the received first control signal. An emergency vehicle is also described.

## Description

### Technical field

This invention generally lies within the field of emergency vehicles; in particular, the invention relates to a control system for an emergency vehicle and an emergency vehicle.

### Prior art

An emergency vehicle is usually provided with a plurality of emergency devices that may be actuated if needed. One example of an emergency device is the siren installed on the emergency vehicle, which siren may be activated by the driver of the emergency vehicle in order to signal its presence to other vehicles travelling on the same stretch of road.

One example of an emergency vehicle is an ambulance.

In known emergency vehicles, the activation means that may be actuated by the driver of the emergency vehicle, in order to activate respective emergency devices, are arranged at various places in the driver's cabin of the emergency vehicle. For example, these control means may be arranged in the center console of the emergency vehicle.

However, this arrangement presents considerable disadvantages. Above all, emergency vehicles are driven by the driver in emergency conditions in which it is necessary to reach predetermined locations, e.g. the location of the emergency and the location of healthcare services such as hospitals, within tight timeframes.

Any distraction to the driver could lead to accidents while driving.

It is clear that if, while driving, the driver has to divert their attention from the road in order to search for and press the various activation means that are spread out within the cabin of the emergency vehicle, the driver would be distracted from driving and could be involved in an accident.

### Summary of the invention

The object of this invention is to overcome the aforementioned problems. In particular, the object of this invention is to provide a control system for an emergency vehicle and an emergency vehicle that make it possible to reduce possible distractions for the driver of the emergency vehicle while driving, thus reducing the risk of involving the emergency vehicle in any accidents.

In order to obtain this result, a control system according to this invention, which may be installed in an emergency vehicle that comprises a steering wheel and at least one first emergency device, includes a coupling means arranged to allow the control device to be coupled to the steering wheel of the emergency vehicle.

The control system also comprises at least one first activation means arranged to be actuated by a user who is driving the emergency vehicle.

Moreover, the control system includes a first electronic control means arranged to:
- generate a first control signal when the user actuates said first activation means; and
- transmit the first control signal to a second electronic control means.

The second electronic control means is arranged to activate or deactivate the first emergency device on the basis of the received first control signal.

The aforesaid and other objects and advantages are achieved, according to an aspect of the invention, by a control system for an emergency vehicle that has the features defined in claim 1, and, according to a further aspect of the invention, by an emergency vehicle that has the features defined in claim 12. Preferred embodiments of the invention are defined in the dependent claims.

### Brief description of the drawings

The functional and structural features of some preferred embodiments of a control system for an emergency vehicle and of an emergency vehicle according to this invention will now be described.

Reference is made to the following appended drawings:
- Fig. 1 shows a first embodiment of a control system for an emergency vehicle according to this invention;
- Fig. 2 is a front perspective view of one embodiment of a control device;
- Fig. 3 is a rear perspective view of the control device in Fig. 2;
- Fig. 4 shows the control device in Fig. 2 and Fig. 3 when coupled to a steering wheel of the emergency vehicle;
- Fig. 5 is a front perspective view of a further embodiment of a control device;
- Fig. 6 is a rear perspective view of the control device in Fig. 5.

### Detailed description

Before describing in detail a plurality of embodiments of the invention, it should be clarified that the invention is not limited in its application to the design details and configuration of the components presented in the following description or illustrated in the drawings. The invention is able to assume other embodiments and to be implemented or constructed in practice in different ways. It should also be understood that the phraseology and terminology have a descriptive purpose and should not be construed as limiting. The use of "include" and "comprise" and the variations thereof are intended to cover the elements set out below and their equivalents, as well as additional elements and the equivalents thereof.

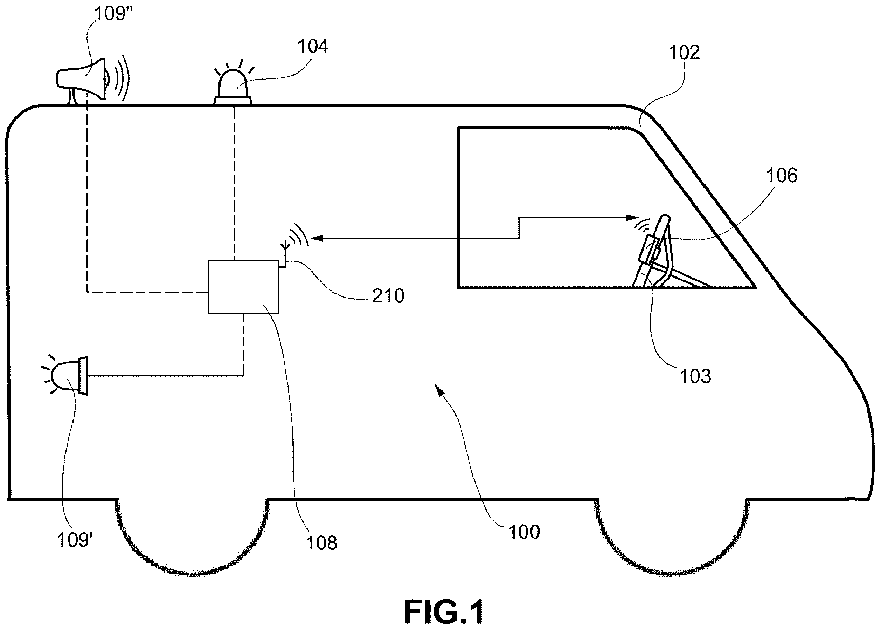

With reference, by way of example, to Fig. 1, the following describes an embodiment of a control system 100 for an emergency vehicle 102.

The emergency vehicle 102 comprises a steering wheel 103 and at least one first emergency device 104.

For example, the emergency vehicle 102 may be an ambulance or a fire engine or the like.

The control system 100 comprises a control device 106. This control device 106 comprises a coupling means 200 arranged to allow the control device 106 to be coupled to the steering wheel 103 of the emergency vehicle 102.

The control device 106 may clearly be coupled to a position on the steering wheel that allows the user driving the emergency vehicle to press it without having to remove or move their hands from the steering wheel.

The control device 106 comprises at least one first activation means 204 arranged to be actuated by the user who is driving the emergency vehicle 102.

The control device 106 also comprises a first electronic control means 206. This first electronic control means 206 is arranged to generate a first control signal when said user actuates the first activation means 204.

The first electronic control means 206 is also arranged to transmit the first control signal to a second electronic control means 108.

The second electronic control means 108 is in turn arranged to activate or deactivate the first emergency device 104 on the basis of the received first control signal.

For example, the first electronic control means 206 may be or comprise at least one of a processor, a controller, a microprocessor, a microcontroller, an FPGA, or the like.

For example, the second electronic control means 108 may be or comprise at least one of a processor, a controller, a microprocessor, a microcontroller, an FPGA, or the like.

In other words, the user driving the emergency vehicle 102, when necessary, may actuate the first activation means 204 of the control device 106 coupled to the steering wheel 103. When the first activation means 204 has been actuated, the first electronic control means 206 may detect this actuation and generate a corresponding first control signal to be sent to a second electronic control means 108 arranged on board the emergency vehicle 102. When this first control signal has been received, the second electronic control means 108 may consequently actuate the first emergency device 104.

For example, in order to actuate the first emergency device 104, the second electronic control means 108 may send a corresponding signal to a control unit associated with said first emergency device, for example arranged at one place in the emergency vehicle, which control unit may or may not allow an electrical supply to be provided to the first emergency device 104 for its actuation.

The second electronic control means 108 may preferably be arranged to deactivate the first emergency device 104 if, when said control means receives the first control signal, the first emergency device 104 is already active. The second electronic control means 108 may be arranged to activate the first emergency device 104 if, when said control means receives the first control signal, the first emergency device 104 is not active.

The first electronic control means 206 may preferably be arranged to transmit the first control signal to the second electronic control means 108 via Bluetooth communication means 210.

In other words, the first electronic control means 206 may include or be connected to first Bluetooth communication means 210. The second electronic control means 108 may also include or be connected to second Bluetooth communication means 210. In this way, Bluetooth communication may be established between these means in order to transmit signals.

In different embodiments, it is also possible to use other types of non-wired communication means, such as wireless or Wi-Fi communication means.

The control device 106 may preferably comprise a supply means, for example at least one battery or at least one rechargeable battery. The supply means may provide electrical energy at least to the first electronic control means and/or to the first activation means 204. When empty, the at least one battery may be replaced and the at least one rechargeable battery may be recharged.

The first activation means 204 may preferably be a switch or a button.

For example, this switch or button may have embossed writing or an embossed design, such that the user driving the emergency vehicle may immediately identify it through touch, without needing to visually check its position. This aspect further reduces the distractions to which the user driving the emergency vehicle is exposed.

The control device 106 may preferably include at least one second activation means 209', 209" which is also arranged to be actuated by the user who is driving the emergency vehicle. In this case, the first electronic control means 108 may be arranged to generate a second control signal when the user actuates the second activation means 209', 209". The first electronic control means 206 may also be arranged to transmit the second control signal to the second electronic control means 108. The second electronic control means may be arranged to activate or deactivate a second emergency device 109', 109" of the emergency vehicle on the basis of the received second control signal.

In other words, the emergency vehicle may comprise a plurality of emergency devices 109', 109". In this case, the control system of this invention may allow the user driving the emergency vehicle to control each of said emergency devices 109', 109" by means of respective activation means 209', 209" present on the control device coupled to the steering wheel.

The user driving the emergency vehicle, when necessary, may therefore actuate the second activation means 209', 209" of the control device 106 coupled to the steering wheel 103. When the second activation means 209', 209" has been actuated, the first electronic control means 206 may detect this actuation and generate a corresponding second control signal to be sent to the second electronic control means 108 arranged on board the emergency vehicle 102. For example, the first electronic control means 206 may be arranged to transmit the second control signal to the second electronic control means 108 via Bluetooth communication means 210. When this second control signal has been received, the second electronic control means 108 may consequently actuate the second emergency device 109', 109".

For example, in order to actuate the second emergency device 109', 109", the second electronic control means 108 may send a corresponding signal to a further control unit associated with said second emergency device 109', 109", for example arranged at one place in the emergency vehicle, which control unit may allow an electrical supply to be provided to the second emergency device for its actuation.

Each emergency device 109', 109" may have its own control unit. In this case, the various control units may be arranged at various places in the emergency vehicle. Alternatively, just one centralized control unit may be provided, which may be connected, by means of suitable cabling, to the various emergency devices installed at various places on the emergency vehicle.

Again, the second electronic control means 108 may be arranged to:
- deactivate the second emergency device 109', 109" if, when said control means receives the second control signal, the second emergency device 109', 109" is already active;
- activate the second emergency device 109', 109" if, when said control means receives the second control signal, the second emergency device 109', 109" is not active.

The second activation means 209', 209" may preferably be a switch or a button.

In further examples (not shown), the first and/or the second activation means may be a lever or a dimmer switch, for example.

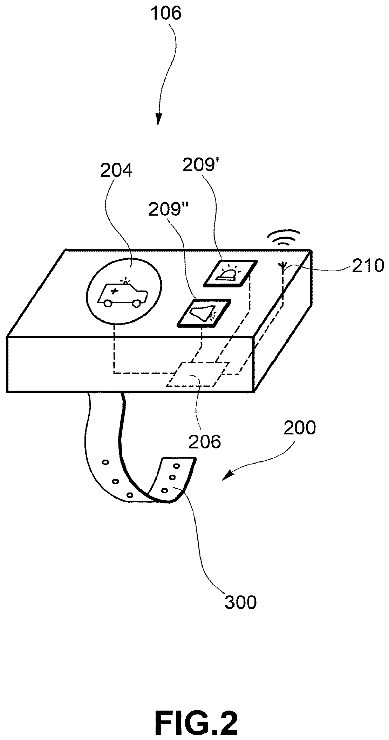

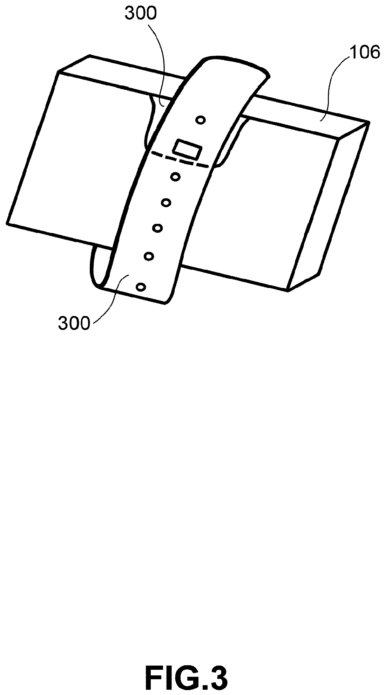

With reference, for example, to Fig. 2 and Fig. 3, the coupling means 200 may be a strap 300.

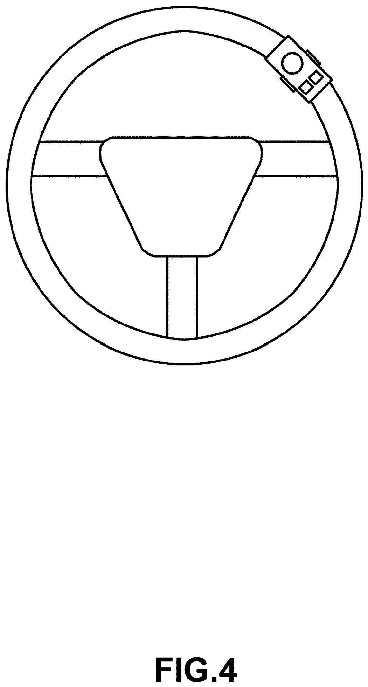

Fig. 4 shows, by way of example, how a control device may be coupled to the steering wheel by means of a strap 300.

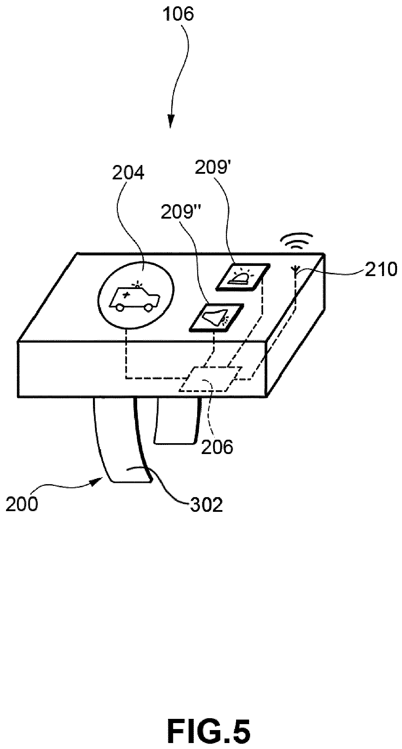

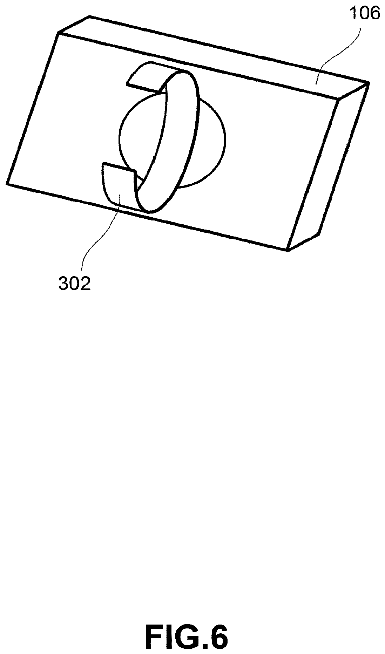

With reference, for example, to Fig. 5 and Fig. 6, the coupling means 200 may be a clip 302.

The first emergency device 104 may preferably include at least one of:
- a siren of the emergency vehicle;
- a lateral visual signaling means of the emergency vehicle;
- a means for lighting a predetermined emergency region within the emergency vehicle;
- a primary auditory signaling device of the emergency vehicle;
- a secondary auditory signaling device of the emergency vehicle.

The second emergency device 109', 109" may preferably include at least one of:
- a siren of the emergency vehicle;
- a lateral visual signaling means of the emergency vehicle;
- a means for lighting a predetermined emergency region within the emergency vehicle;
- a primary auditory signaling device of the emergency vehicle;
- a secondary auditory signaling device of the emergency vehicle.

That which has been described for the second activation means 209', 209" and the second emergency device 109', 109" may clearly be applied analogously to any further activation means and further emergency devices. The number of these activation means and emergency devices may clearly also be greater than two.

In a further aspect, the invention relates to an emergency vehicle which comprises a steering wheel 103, at least one first emergency device 104, and a control system 100 according to any of the embodiments described above.

The emergency vehicle may preferably be an ambulance or a fire engine.

The first emergency device 104 may preferably comprise at least one of:
- a siren of the emergency vehicle;
- a lateral visual signaling means of the emergency vehicle;
- a means for lighting a predetermined emergency region within the emergency vehicle;
- a primary auditory signaling device of the emergency vehicle;
- a secondary auditory signaling device of the emergency vehicle.

Various aspects and embodiments of a control system for an emergency vehicle and of an emergency vehicle according to the invention have been described. It is understood that each embodiment may be combined with any other embodiment. Moreover, the invention is not limited to the embodiments described, but may be varied within the scope defined by the appended claims.

## Claims

1. Control system (100) for an emergency vehicle (102) comprising a steering wheel (103) and at least one first emergency device (104), wherein said control system comprises a control device (106) including:
- a coupling means (200) arranged to allow said control device (106) to be coupled to the steering wheel (103) of the emergency vehicle;
- at least one first activation means (204) arranged to be actuated by a user who is driving the emergency vehicle;
- a first electronic control means (206) arranged to:
a) generate a first control signal when said user actuates said first activation means (204); and
b) transmit said first control signal to a second electronic control means (108);
wherein said second electronic control means (108) is arranged to activate or deactivate said first emergency device (104) on the basis of said received first control signal.

2. Control system (100) according to claim 1, wherein said second electronic control means (108) is arranged to:
- deactivate said first emergency device (104) if, when said second electronic control means receives said first control signal, the first emergency device (104) is already active;
- activate said first emergency device (104) if, when said second electronic control means receives said first control signal, the first emergency device (104) is not active.

3. Control system (100) according to claim 1 or claim 2, wherein said first electronic control means (206) is arranged to transmit said first control signal to the second electronic control means (108) via Bluetooth communication means (210).

4. Control system (100) according to any of the preceding claims, wherein said first activation means (204) is a switch or a button.

5. Control system (100) according to any of the preceding claims, wherein said control device (106) includes:
- at least one second activation means (209', 209") arranged to be actuated by the user who is driving the emergency vehicle;
wherein said first electronic control means (206) is arranged to:
a') also generate a second control signal when said user actuates said second activation means (209', 209"); and
b') transmit said second control signal to said second electronic control means (108);
wherein said second electronic control means (108) is arranged to activate or deactivate a second emergency device (109', 109") of the emergency vehicle on the basis of said received second control signal.

6. Control system (100) according to claim 5, wherein said second electronic control means is arranged to:
- deactivate said second emergency device (109', 109") if, when said second electronic control means receives said second control signal, the second emergency device (109', 109") is already active;
- activate said second emergency device (109', 109") if, when said second electronic control means receives said second control signal, the second emergency device (109', 109") is not active.

7. Control system (100) according to any of the preceding claims, wherein said second activation means (209', 209") is a switch or a button.

8. Control system (100) according to any of the preceding claims, wherein the coupling means (200) is a strap (300).

9. Control system (100) according to any of claims 1 to 7, wherein the coupling means (200) is a clip (302).

10. Control system (100) according to any of the preceding claims, wherein said first emergency device (104) includes at least one of:
- a siren of the emergency vehicle;
- a lateral visual signaling means of the emergency vehicle;
- a means for lighting a predetermined emergency region within the emergency vehicle;
- a primary auditory signaling device of the emergency vehicle;
- a secondary auditory signaling device of the emergency vehicle.

11. Control system (100) according to any of claims 5 to 10, wherein said second emergency device (109', 109") includes at least one of:
- a siren of the emergency vehicle;
- a lateral visual signaling means of the emergency vehicle;
- a means for lighting a predetermined emergency region within the emergency vehicle;
- a primary auditory signaling device of the emergency vehicle;
- a secondary auditory signaling device of the emergency vehicle.

12. Emergency vehicle, including:
- a steering wheel (103);
- at least one first emergency device (104); and
- a control system (100) according to any of the preceding claims.

13. Emergency vehicle according to claim 12, wherein said emergency vehicle is an ambulance or a fire engine.

14. Emergency vehicle according to claim 12 or claim 13, wherein said first emergency device 104 comprises at least one of:
- a siren of the emergency vehicle;
- a lateral visual signaling means of the emergency vehicle;
- a means for lighting a predetermined emergency region within the emergency vehicle;
- a primary auditory signaling device of the emergency vehicle;
- a secondary auditory signaling device of the emergency vehicle.
